(19) Europäisches Patentamt European Patent Office Office européen des brevets

(11) EP 4 815 280 A1

(12) # EUROPEAN PATENT APPLICATION

(43) Date of publication:
**30.09.2026 Bulletin 2026/40**

(21) Application number: **26166134.2**

(22) Date of filing: **19.03.2026**

(51) International Patent Classification (IPC):
***H02M 1/00*** *(2006.01)* ***H02M 1/42*** *(2007.01)*
***H02M 3/00*** *(2006.01)* ***H02M 3/335*** *(2006.01)*

(52) Cooperative Patent Classification (CPC):
**H02M 3/01; H02M 1/0006; H02M 1/007; H02M 1/4225; H02M 3/33571**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.03.2025 US 202519094547**

(71) Applicant: **NXP USA, Inc**
**Austin, TX 78735 (US)**

(72) Inventors:
- **Degen, Peter Theodorus Johannes**
  **5656AG Eindhoven (NL)**
- **Langeslag, Wilhemus Hinderikus Maria**
  **5656AG Eindhoven (NL)**

(74) Representative: **Krott, Michel**
**NXP Semiconductors**
**Intellectual Property Group**
**High Tech Campus 60**
**5656 AG Eindhoven (NL)**

(54) **SWITCHED-MODE POWER SUPPLY CURRENT DISTURBANCE COMPENSATION**

(57) Embodiments of a switched-mode power supply (SMPS) converter circuit and a method for operating an SMPS converter circuit disclosed. In an embodiment, an SMPS converter circuit includes a transformer including a primary winding and a secondary winding, an SMPS controller, a first resistor coupled between the transformer and the SMPS controller, an auxiliary winding, and a second resistor coupled to the auxiliary winding, where the first resistor is coupled to the second resistor.

102-1
116
112
100
SMPS
MAINS
~
102-2
110
114
118
INPUT FILTER
104
Vfiltered
120
122
124
CONVERTER CIRCUIT
Vin
126
SMPS CONTROL IC
GATE HS
S2
132
TRANSFORMER MODEL
146
102-3
130
HB
np
ns
Vout
Lm
136
PFC DRAIN
128
I1
134
148
S3
GATE PFC
GATE LS
S1
R3
SNS BOOST
SNS CURAHB
140
VCR
129
Rsense
R4
SUPIC
D2
CAUX
142
138
CSUPIC
D1
144
na
106
SNS FB
Raux
150

FIG. 1



Processed by Luminess, 75001 PARIS (FR)

## Description

BACKGROUND

A switched-mode power supply (SMPS) converts an input voltage and/or current to a desired output voltage and/or current using a switching power stage. A current disturbance in an SMPS converter circuit of an SMPS can disrupt the operation of the SMPS converter circuit and cause variations in a supply voltage of an SMPS controller of the SMPS converter circuit.

SUMMARY

Embodiments of an SMPS converter circuit and a method for operating an SMPS converter circuit disclosed. In an embodiment, an SMPS converter circuit includes a transformer including a primary winding and a secondary winding, an SMPS controller, a first resistor coupled between the transformer and the SMPS controller, an auxiliary winding, and a second resistor coupled to the auxiliary winding, where the first resistor is coupled to the second resistor. Other embodiments are also disclosed.

In an embodiment, a supply voltage to the SMPS controller is a function of an input voltage to the SMPS converter circuit.

In an embodiment, the SMPS controller includes an SMPS control integrated circuit (IC).

In an embodiment, the first resistor is coupled between the transformer and a first pin of the SMPS control IC.

In an embodiment, the SMPS converter circuit further includes a first switch coupled to the SMPS control IC and the transformer and a second switch coupled to the SMPS control IC and the transformer.

In an embodiment, the SMPS converter circuit further includes a first switch coupled to a first pin of the SMPS control IC and a second switch coupled to a second pin of the SMPS control IC.

In an embodiment, the SMPS control IC is configured to control the first switch and the second switch.

In an embodiment, the SMPS converter circuit further includes a capacitor or a third resistor coupled between the first resistor and the transformer.

In an embodiment, the SMPS converter circuit further includes capacitors and diodes coupled between the SMPS controller and the auxiliary winding.

In an embodiment, the SMPS controller is configured to perform a Power Factor Correction (PFC) function.

In an embodiment, the SMPS controller is configured to perform an Asymmetrical Half Bridge (AHB) function.

In an embodiment, the SMPS converter circuit further includes a second auxiliary winding and a third resistor coupled to the second auxiliary winding, where the first resistor is coupled to the second and third resistors.

In an embodiment, an SMPS converter circuit includes a transformer including a primary winding and a secondary winding, an SMPS control IC, a first resistor coupled between the transformer and a first pin of the SMPS control IC, an auxiliary winding, and a second resistor coupled to the auxiliary winding, where the first resistor is coupled to ground through the second resistor, and where a supply voltage to the SMPS control IC is a function of an input voltage to the SMPS converter circuit.

In an embodiment, the SMPS converter circuit further includes a first switch coupled to a second pin of the SMPS control IC and a second switch coupled to a third pin of the SMPS control IC, where the SMPS control IC is configured to control the first switch and the second switch.

In an embodiment, the SMPS converter circuit further includes a capacitor or a third resistor coupled between the first resistor and the transformer.

In an embodiment, the SMPS converter circuit further includes capacitors and diodes coupled between a second pin of the SMPS control IC and the auxiliary winding.

In an embodiment, the SMPS control IC is configured to perform a Power Factor Correction (PFC) function.

In an embodiment, the SMPS control IC is configured to perform an Asymmetrical Half Bridge (AHB) function.

In an embodiment, the SMPS converter circuit further includes a second auxiliary winding and a third resistor coupled to the second auxiliary winding, where the first resistor is coupled to the ground through the second and third resistors.

In an embodiment, a method for operating a switched-mode power supply (SMPS) converter circuit involves generating a supply voltage of an SMPS control integrated circuit (IC) of the SMPS converter circuit as a function of an input voltage of the SMPS converter circuit and coupling a first resistor situated between a transformer of the SMPS converter circuit and the SMPS control IC to a voltage through a second resistor that is coupled to an auxiliary winding of the SMPS converter circuit.

Other aspects in accordance with the invention will become apparent from the following detailed description, taken in conjunction with the accompanying drawings, illustrated by way of example of the principles of the invention.

BRIEF DESCRIPTION OF THE DRAWINGS

Fig. 1 is a schematic block diagram of an SMPS in accordance with an embodiment of the invention.
Fig. 2 depicts current flows at a converter circuit of the SMPS depicted in Fig. 1 during a primary stroke.
Fig. 3 depicts current flows at the converter circuit of the SMPS depicted in Fig. 1 during a secondary stroke.
Fig. 4 depicts an SMPS with two auxiliary windings in accordance with an embodiment of the present invention.
Fig. 5 depicts an SMPS in accordance with an embodiment of the present invention.
Fig. 6 is a process flow diagram of a method for operating an SMPS converter circuit in accordance with an embodiment of the invention.

Throughout the description, similar reference numbers may be used to identify similar elements.

DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

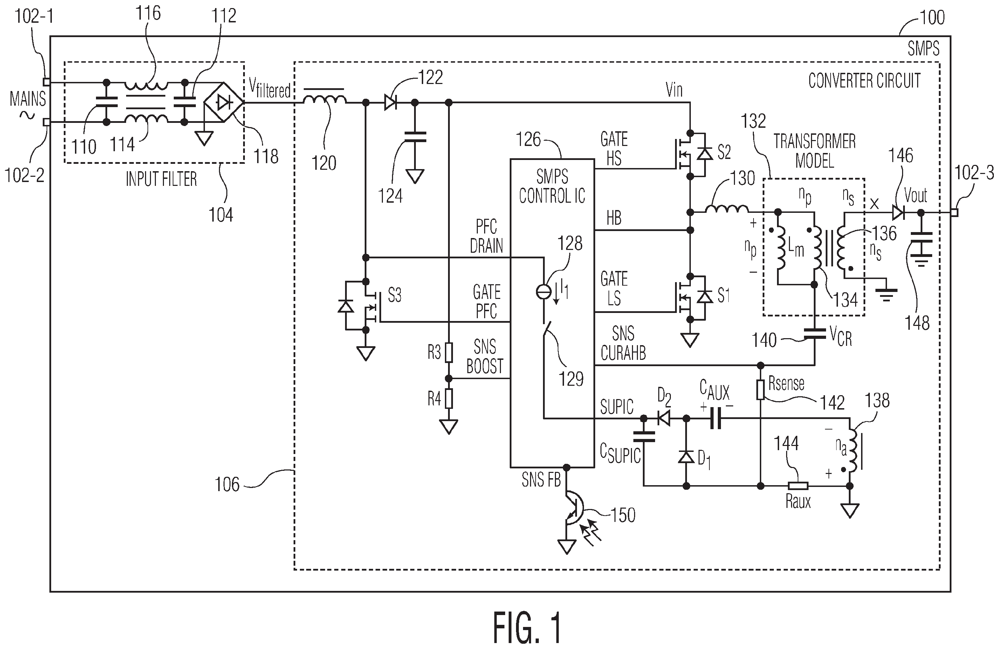

Fig. 1 is a schematic block diagram of a switched-mode power supply (SMPS) 100 in accordance with an embodiment of the invention. The SMPS converts an input power to a desired output power (e.g., converts an input voltage level to a stable output voltage level for load currents within an acceptable range). For example, the SMPS delivers power available at an input of the SMPS to a load in a controlled manner. In some embodiments, the input power received at the SMPS is Alternating Current (AC) power and the output power is an output voltage, such as a Direct Current (DC) voltage. The SMPS can be used in various applications, such as automotive applications, communications applications, industrial applications, medical applications, computer applications, and/or consumer or appliance applications. For example, the SMPS may be used to supply a computing device, such as a smartphone, a tablet computer, a laptop, etc.

In the embodiment depicted in Fig. 1, the SMPS 100 includes input/output terminals 102-1, 102-2, 102-3, an input filter 104, and a converter circuit 106. In the embodiment depicted in Fig. 1, the input terminals 102-1, 102-2 of the SMPS 100 are connected to AC mains, which supply AC power to the SMPS 100. The energy received through the input terminals 102-1, 102-2 is filtered by the input filter 104. An output voltage Vout of the SMPS is output through the output terminal 102-3. In some embodiments, the SMPS 100 is implemented on a substrate, such as a printed circuit board (PCB). In an embodiment, at least one component (e.g., a controller) of the SMPS 100 is packaged as a stand-alone semiconductor Integrated Circuit (IC) chip. Although the SMPS is shown in Fig. 1 as including certain circuit elements, in other embodiments, the SMPS may include one or more additional/different circuit elements. For example, the SMPS may include a capacitive circuit connected to the output terminal 102-3, which is used to stabilize the output voltage Vout of the SMPS 100.

In the embodiment depicted in Fig. 1, the input filter 104 includes capacitors 110, 112, inductors 114, 116, and a bridge rectifier diode 118. In the embodiment depicted in Fig. 1, the input filter 104 is configured to filter the AC power inputted into the SMPS 100. In some embodiments, the input filter 104 is implemented on a substrate, such as a semiconductor wafer or a PCB. In an embodiment, at least one component (e.g., the bridge rectifier diode 118) of the input filter 104 is packaged as an IC chip.

In the embodiment depicted in Fig. 1, the converter circuit 106 includes inductors 120, 130, capacitors 124, 140, 148, $C_{SUPIC}$, $C_{AUX}$, diodes 122, 146, D1, D2, resistors R3, R4, 142, 144, a SMPS control IC 126, a transformer 132 that includes a primary winding 134 and a secondary winding 136 and has a magnetizing inductance $L_m$, an auxiliary winding 138, switches S1, S2, S3 that are implemented as, for example, metal-oxide-semiconductor field-effect transistors (MOSFETs), and an opto coupler 150. In some embodiments, the switch S2 is referred to as the high-side (HS) switch S2 while the switch S1 is referred to as the low-side (LS) switch S1. In the embodiment depicted in Fig. 1, the SMPS control IC is configured to control the output voltage via the opto coupler 150. In some embodiments, the SMPS control IC is configured to control the switches S1, S2, by, for example, controlling voltages to gate terminal of the switches S1, S2. In some embodiments, the SMPS control IC is configured to perform a Power Factor Correction (PFC) function. In some embodiments, the SMPS control IC is configured to perform an Asymmetrical Half Bridge (AHB) function. In some embodiments, the supply voltage to the SMPS control IC is a function of the input voltage to the converter circuit 106. In the embodiment depicted in Fig. 1, the capacitor 140 is connected between the sense resistor 142 and the transformer 132. Although the converter circuit 106 is shown in Fig. 1 as including certain circuit elements, in other embodiments, the converter circuit 106 may include one or more additional/different circuit elements. For example, although the converter circuit 106 is shown in Fig. 1 as including the MOSFETswitches S1, S2, S3, in other embodiments, the converter circuit 106 may include other type of switches.

In the embodiment depicted in Fig. 1, the SMPS control IC 126 is embodied as a packaged IC device. As shown in Fig. 1, the SMPS control IC 126 includes 9 pins/terminals, PFCDRAIN (connected to the inductor 120, the switch S3, and the diode 122), GATEPFC (connected to the switch S3), SNSBOOST (connected to the resistors R3, R4), SNSFB (connected to the opto coupler 150), GATEHS (connected to the high-side switch S2), HB (connected to the inductor 130), GATELS (connected to the low-side switch S1), SNSCURAHB (connected to the sense resistor 142 and the capacitor 140), and SUPIC (connected to the diode D2 and the capacitor $C_{SUPIC}$). In the embodiment depicted in Fig. 1, the switch S2 is coupled to the GATEHS pin of the SMPS control IC, the switch S1 is coupled to the GATELS pin of the SMPS control IC, the sense resistor 142 is connected between the transformer 132 and the SNSCURAHB pin of the SMPS control IC 126, the resistor 144 is coupled to the auxiliary winding 138, and the capacitors $C_{SUPIC}$, $C_{AUX}$ and the diodes D2, D2 are connected between the SUPIC pin of the SMPS control IC 126 and the auxiliary winding 138. The packaged IC device depicted in Fig. 1 is one possible packaged IC device of the SMPS control IC 126. However, the packaged IC device of the SMPS control IC 126 is not limited to the embodiment shown in Fig. 1. For example, although the packaged IC device of the SMPS control IC 126 is shown in Fig. 1 as including 9 pins/terminals, in other embodiments, the SMPS control IC 126 may include more than or less than 9 pins/terminals. In the embodiment depicted in Fig. 1, the SMPS control IC 126 can be simplified as containing a current source 128 and a switch 129.

Switch Mode Power Supplies (SMPS) are widely used to convert the mains voltage into a lower voltage which is appropriate for an application. A well know example is an adapter for mobile phones, laptops, tablets, etc. As each device has a different power level, different adapters are required. To limit the current through cables and connecters, a higher power implies a higher output voltage. Therefore, an adapter for a laptop has a higher output voltage than the adapter for a mobile phone. As a result, different adapters are not compatible with each other. To have a single adapter for multiple applications, the Universal Serial Bus Power Delivery (USB-PD) standard is introduced. According to this standard, the output voltage of an adapter varies, depending on the attached device. According to the USB-PD Extended Power Range (EPR) requirements, the output voltage can vary from 5V to 48V. At the highest voltage, the maximum output current can be 5A, giving a maximum output power of 240W. A typical topology used for this application is an AHB (Asymmetrical Half Bridge) topology. As the EN 61000-3-2 requires power factor correction be incorporated into consumer products, typically a PFC (Power Factor Correction) is added between the mains connection and the AHB. Mostly the PFC control IC and AHB control IC are combined into one control IC (e.g., the SMPS control IC 126). An IC needs a supply voltage to operate properly. If the IC also needs to drive external MOSFETs, a typical minimum supply voltage is around 15V. Most inductor-inductor-capacitor (LLC) converters have a fixed output voltage. Via an extra output on the transformer, this output voltage can be copied with a fixed ratio to supply the (primary) control IC. In this way a stable supply voltage is made. Supplying the primary control IC in the same manner as in an LLC application implies that the supply voltage varies from 15V to 144V. Not only a control IC cannot handle this high voltage, it can also cause extra losses and lowers the efficiency of the converter. A better approach is generating a supply voltage that scales with the input voltage. As most power supplies require a PFC converter, the input voltage of an AHB is limited to, for example, 200V to 400V, which implies that the supply voltage of a control IC only varies a factor of 2 instead of a factor of almost 10. An AHB converter is typically controlled via a current control loop, assuring stability over the full output and input voltage range. The disadvantage to supply the IC as a function of the input voltage is that it disturbs the current control loop. In the embodiment depicted in Fig. 1, the SMPS 100 can

compensate for the current disturbance, enabling the use of a current control loop in combination with the supply voltage of the SMPS control IC 126 that is a function of the input voltage of the converter circuit 106.

In an example operation of the SMPS 100, when initially connecting the mains voltage, the SUPIC capacitor ($C_{SUPIC}$) is charged via an internal current source 128 ($I_1$) of the SMPS control IC 126. When the SUPIC voltage reaches a start level (e.g., 19V), the internal current source 128 is disabled and the converter circuit 106 starts switching. The SUPIC pin is then supplied via the auxiliary winding 138. Via the sense resistor 142 ($R_{SENSE}$), the resonant current can be measured. The voltage at the SNSCURAHB pin is related to the resonant current. For proper control, there is an internal VSNSCURAHB regulation level. When the SNSCURAHB pin voltage reaches this level, the high-side switch S2 is turned off and the secondary stroke is started. During the primary stroke, the high-side switch S2 is turned on (GateHS = '1'), there is a positive voltage across the transformer 132. Due to the polarity of the windings 134, 136 to the output and the auxiliary winding 138, in combination with the connected diode 146, there is no current to the output or to the supply (the voltage at the SUPIC pin of the SMPS control IC 126) when the supply is related to the output voltage. In that case, the voltage at the SNSCURAHB can reflect the current through the magnetizing inductance ($L_m$) of the transformer 132. During the secondary stroke, the low-side switch S1 is turned on (GateLS = '1'), there is a negative voltage across the transformer 132.

To limit the range of the supply voltage of the SMPS control IC 126, it is preferred that the supply voltage of the SMPS control IC 126 is related to the input voltage of the converter circuit 106 and not to the output voltage of the converter circuit 106. However, currents generated during the primary stroke can disturb the regulation loop. The current measurement at the SNSCURAHB pin is a combination of the current through the magnetizing inductance $L_m$ of the transformer 132 to be measured, and the disturbance caused by the reflected current from the supply. If the reflected current from the supply is compensated, only the current through the magnetizing inductance $L_m$ needs to be measured and any disturbance in the regulation loop is avoided.

In the embodiment depicted in Fig. 1, the sense resistor 142 with a resistance value $R_{sense}$ is not directly connected to a fixed voltage, such as, the ground (zero volt). Specifically, the sense resistor 142 is connected to the resistor 144 (e.g., to the ground through the resistor 144) with a resistance value $R_{aux}$ to compensate for a current disturbance in the converter circuit 106 (e.g., the influence of the auxiliary winding 138 on the measurement of the resonant current). Consequently, the current disturbance can be compensated using low ohmic resistors with low costs. In this way, the auxiliary winding voltage is related to the input voltage for an AHB application. Compared to an approach of using a dedicated converter (up-converter) to supply the SMPS control IC 126, compensating for current disturbance by connecting the sense resistor 142 to the ground through the resistor 144 does not require an extra pin to regulate the converter circuit 106 or no load / low load requirements for low output voltages. For example, if electrical terminal or pin count is limited in the SMPS control IC 126, for example, for cost reasons, an additional electrical terminal or pin is undesired.

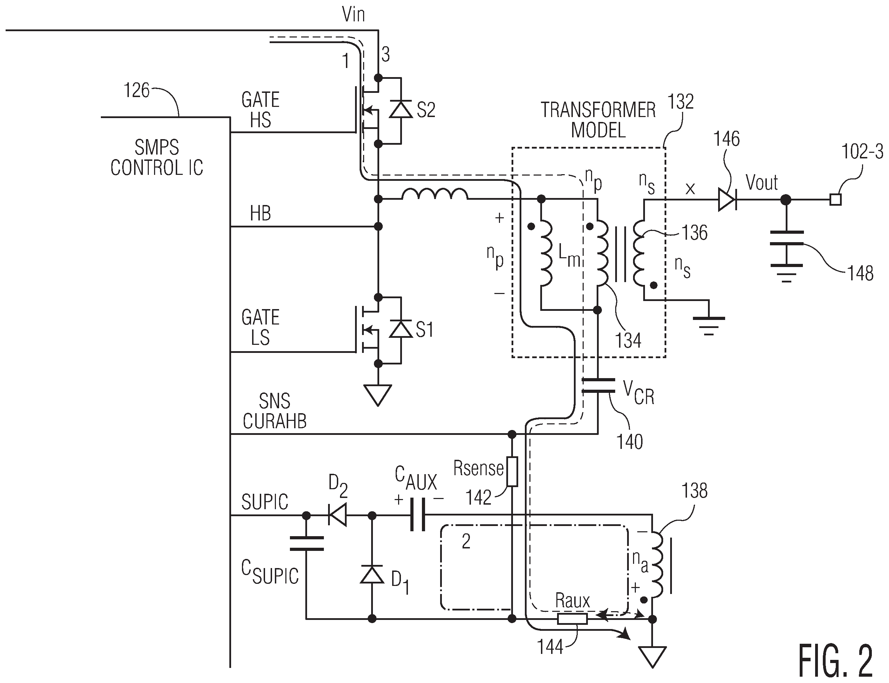

Fig. 2 depicts current flows at the converter circuit 106 of the SMPS 100 depicted in Fig. 1 during a primary stroke. The voltage $V_{SNSCURAHB}$ at the SNSCURAHB pin of the SMPS control IC 126 depends on the current through the magnetizing inductance (1), the reflected current of the supply (3), the supply current (2) and the resistors Rsense and Raux according to the following equation:

$$V_{SNSCURAHB} = (I_{Lm}(1) + I_{refl_supply}(3)) \cdot (Rsense + Raux) - I_{supply}(2) \cdot R_{aux}\ (1) \qquad (1)$$

It is desirable that the voltage $V_{SNSCURAHB}$ at the SNSCURAHB pin is a function of the magnetizing inductance:

$$V_{SNSCURAHB} = I_{Lm}(1) \cdot (Rsense + Raux) \qquad (2)$$

Both equations are the same when:

$$I_{refl_supply} \cdot (Rsense + Raux) = I_{supply} \cdot Raux \qquad (3)$$

The relation between $I_{refl_supply}$ and $I_{supply}$ is:

$$I_{refl_supply} = \frac{n_a}{n_p} \cdot I_{supply} \qquad (4)$$

Combining equations (3) and (4), it can be derived:

$$\frac{n_a}{n_p} \cdot I_{supply} \cdot (Rsense + Raux) = I_{supply} \cdot Raux \quad (5)$$

Simplifying equation (5), it can be derived:

$$Raux = \frac{n_a}{n_p - n_a} \cdot Rsense \quad (6)$$

When the resistance value Raux of the resistor 144 is chosen according to equation (6), the voltage $V_{SNSCURAHB}$ at the SNSCURAHB pin of the SMPS control IC 126 only depends on the magnetizing inductance $L_m$, as defined in equation (2). For example, for a typical value for np (the number of turns in the primary winding 134)= 48, to achieve a SUPIC voltage of 15V at Vin = 300V, na (the number of turns in the auxiliary winding 138) = 2.4. Due to the integer number of windings, 3 is chosen and the SUPIC voltage is 3 / 48 * 300 = 18.75V at Vin = 300V.

For a typical $R_{sense}$ value 250 milliohm (mΩ) of the sense resistor 142, the corresponding value for Raux can be expressed as:

$$Raux = \frac{n_a}{n_p - n_a} \cdot Rsense = \frac{3}{48-3} \cdot 250 = 17m\Omega \quad (7)$$

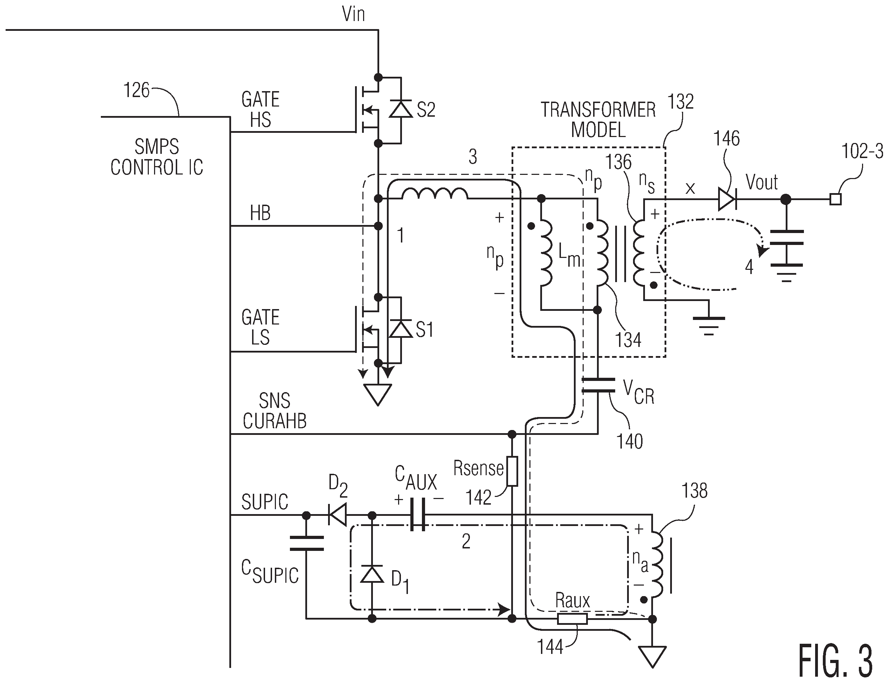

Fig. 3 depicts current flows at the converter circuit 106 of the SMPS 100 depicted in Fig. 1 during a secondary stroke. When the SNSCURAHB pin voltage of the SMPS control IC 126 reaches an internal VSNSCURAHB regulation level, the high-side switch S2 is turned off and the secondary stroke is started. Due to the polarity of the windings, there is a positive voltage of the transformer 132 towards the output and towards the supply capacitor ($C_{SUPIC}$), which causes a current towards the output (4) (which is the intended behavior) and a current towards the supply (2). Both these currents are reflected back to the input (3). The current measured at the SNSCURAHB pin of the SMPS control IC 126 not only reflects the current through the magnetizing inductance (Lm), but also the reflected current from the output and towards the supply. During the secondary stroke, the disturbance from the supply current is fully compensated. The supply capacitor ($C_{SUPIC}$) is connected to ground via the resistor 144 with the resistance value Raux. In some embodiments, when/if this is unwanted (as it gives a small extra voltage drop when supplying the IC), the supply capacitor ($C_{SUPIC}$) is connected to ground. Then, there is no compensation during the secondary stroke, but does not influence the regulation loop.

In an example operation of the converter circuit 106, during the primary stroke (when the GATEHS signal is logic high), the resonant capacitor 140 is charged to $V_{CR}$. The voltage across the resonant capacitor 140 is related to the output voltage Vout times the transformer turns ratio ($V_{CR} = V_{out}$ * np / ns) (ns being the number of turns in the secondary winding 136). The voltage $V_{trafo}$ across the transformer 132 can be expressed as:

$$V_{trafo} = V_{in} - V_{CR} = V_{in} - V_{out} \cdot n_p/n_s \quad (8)$$

The voltage across the auxiliary winding can be expressed as:

$$V_{aux} = -n_a/n_p \cdot (V_{in} - V_{CR}) = -n_a/n_p \cdot (V_{in} - V_{out} \cdot n_p/n_s) \quad (9)$$

Via the diode $D_1$, the capacitor $C_{AUX}$ is charged to:

$$V_{Caux} = n_a/n_p \cdot (V_{in} - V_{out} \cdot n_p/n_s) \quad (10)$$

Then during the secondary stroke (when the GATELS signal is logic high), there is a current towards the secondary side and also to the auxiliary winding. The voltage across the resonant capacitor ($V_{CR}$) still equals Vout * np/ns. The voltage across the auxiliary winding can be expressed as:

$$V_{aux} = n_a/n_p \cdot V_{CR} = n_a/n_p \cdot V_{out} \cdot n_p/n_s = n_a/n_s \cdot V_{out} \quad (11)$$

The capacitor $C_{AUX}$ was previously charged to $V_{Caux} = n_a/n_p \cdot (V_{in} - V_{out} \cdot n_p/n_s)$. The voltage at the SUPIC pin is now the summation of these two:

$$V_{SUPIC} = V_{aux} + V_{Caux} = n_a/n_s \cdot V_{out} + n_a/n_p \cdot (V_{in} - V_{out} \cdot n_p/n_s) = n_a/n_p \cdot V_{in} \quad (12)$$

Consequently, the voltage at the SUPIC pin of the SMPS control IC 126 is related to the input voltage Vin. When the input voltage varies between 300 and 400V, by choosing proper values for $n_a$ and $n_p$, the SUPIC voltage can be set to, for example, between 15V and 20V, which can be handled by the SMPS control IC 126 and keeps the losses to a minimum.

In some embodiments, when the input voltage variation is larger (e.g., from 100V to 400V), multiple auxiliary windings can be used to supply an SMPS control IC (e.g., the SMPS control IC 126).

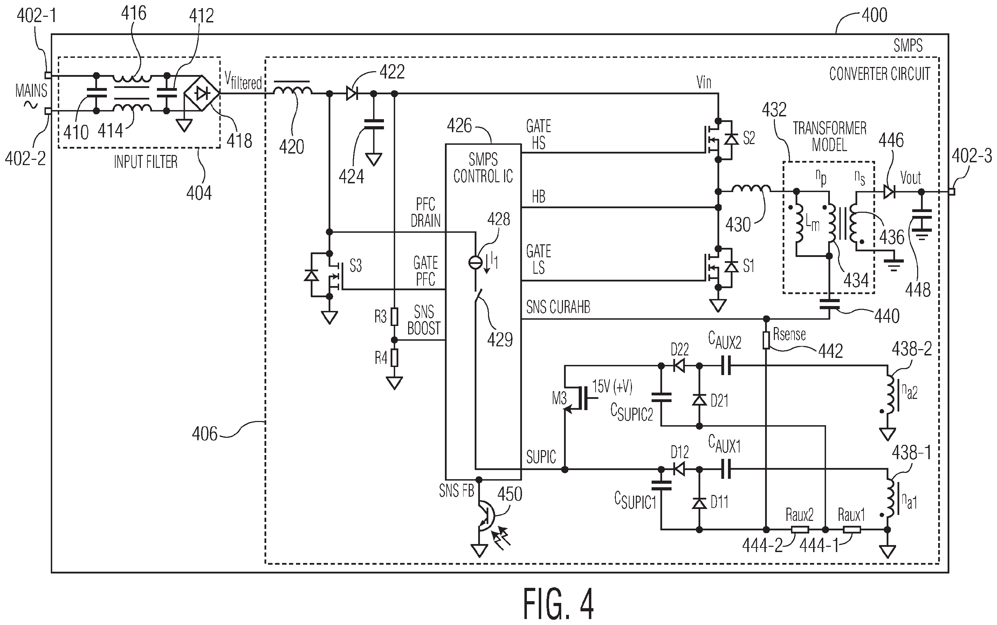

Fig. 4 depicts an SMPS 400 with two auxiliary windings 438-1, 438-2 in accordance with an embodiment of the present invention. The SMPS 400 depicted in Fig. 4 is an embodiment of the SMPS 100 depicted in Fig. 1. However, the SMPS 100 depicted in Fig. 1 is not limited to the embodiment depicted in Fig. 4. In the embodiment depicted in Fig. 4, the SMPS 400 includes input/output terminals 402-1, 402-2, 402-3, an input filter 404, and a converter circuit 406. In the embodiment depicted in Fig. 4, the input terminals 402-1, 402-2 of the SMPS 400 are connected to AC mains, which supply AC power to the SMPS 400. The energy received through the input terminals 402-1, 402-2 is filtered by the input filter 404. An output voltage Vout of the SMPS is output through the output terminal 402-3. In some embodiments, the SMPS 400 is implemented on a substrate, such as a PCB. In an embodiment, at least one component of the SMPS 400 is packaged as a stand-alone semiconductor IC chip. Although the SMPS is shown in Fig. 4 as including certain circuit elements, in other embodiments, the SMPS may include one or more additional/different circuit elements. For example, the SMPS may include a capacitive circuit connected to the output terminal 402-3, which is used to stabilize the output voltage Vout of the SMPS 400.

In the embodiment depicted in Fig. 4, the input filter 404 includes capacitors 410, 412, inductors 414, 416, and a bridge rectifier diode 418. In the embodiment depicted in Fig. 4, the input filter 404 is configured to filter the AC power inputted into the SMPS 400. In some embodiments, the input filter 404 is implemented on a substrate, such as a semiconductor wafer or a PCB. In an embodiment, at least one component (e.g., the bridge rectifier diode 418) of the input filter 404 is packaged as an IC chip.

In the embodiment depicted in Fig. 4, the converter circuit 406 includes inductors 420, 430, capacitors 424, 440, 448, $C_{SUPIC1}$, $C_{SUPIC2}$, $C_{AUX1}$, $C_{AUX2}$, diodes 422, 446, D11, D12, D21, D22, resistors R3, R4, 442, 444-1, 444-2, a SMPS control IC 426, a transformer 432 that includes a primary winding 434 and a secondary winding 436 and has a magnetizing inductance $L_m$, an auxiliary windings 438-1, 438-2, switches S1, S2, S3 that are implemented as, for example, metal-oxide-semiconductor field-effect transistors (MOSFETs), an opto coupler 450, and a transistor M3. In some embodiments, the switch S2 is referred to as the high-side switch S2 while the switch S1 is referred to as the low-side switch S1. In the embodiment depicted in Fig. 4, the SMPS control IC 426 is configured to control the output voltage via the opto coupler 450. In some embodiments, the SMPS control IC is configured to control the switches S1, S2, by, for example, controlling voltages to gate terminal of the switches S1, S2. In some embodiments, the SMPS control IC is configured to perform a PFC function. In some embodiments, the supply voltage to the SMPS control IC is a function of the input voltage to the converter circuit 406. In the embodiment depicted in Fig. 4, the capacitor 440 is connected between the sense resistor 442 and the transformer 432. Although the converter circuit 406 is shown in Fig. 4 as including certain circuit elements, in other embodiments, the converter circuit 406 may include one or more additional/different circuit elements. For example, although the converter circuit 406 is shown in Fig. 4 as including the MOSFET switches S1, S2, S3, in other embodiments, the converter circuit 406 may include other type of switches.

In the embodiment depicted in Fig. 4, the SMPS control IC 426 is embodied as a packaged IC device. As shown in Fig. 4, the SMPS control IC 426 includes 9 pins/terminals, PFCDRAIN (connected to the inductor 420, the switch S3, and the diode 422), GATEPFC (connected to the switch S3), SNSBOOST (connected to the resistors R3, R4), SNSFB (connected to the opto coupler 450), GATEHS (connected to the high-side switch S2), HB (connected to the inductor 430), GATELS (connected to the low-side switch S1), SNSCURAHB (connected to the sense resistor 442), and SUPIC (connected to the transistor M3, the diode D12, and the capacitor $C_{SUPIC1}$). In the embodiment depicted in Fig. 4, the switch S2 is coupled to the GATEHS pin of the SMPS control IC 426, the switch S1 is coupled to the GATELS pin of the SMPS control IC 426, the sense resistor 442 is connected between the sense resistor 444-2and the SNSCURAHB pin of the SMPS control IC 426, and the resistor 444-1 is coupled to the auxiliary winding 438-1, and the capacitor $C_{SUPIC2}$ and the diode D21. The diode D12 is connected between the SUPIC pin of the SMPS control IC 426 and the diode D11, while the capacitors $C_{SUPIC2}$, $C_{AUX2}$ and the diodes D21, D22 are connected between the SUPIC pin of the SMPS control IC 426 and the auxiliary winding 438-2. The packaged IC device depicted in Fig. 4 is one possible packaged IC device of the SMPS control IC 426. However, the packaged IC device of the SMPS control IC 426 is not limited to the embodiment shown in Fig. 4. For example, although the packaged IC device of the SMPS control IC 426 is shown in Fig. 4 as including 9 pins/terminals, in other embodiments, the SMPS control IC 426 may include more than or less than 9 pins/terminals. In the embodiment depicted in Fig. 4, the SMPS control IC 426 can be simplified as containing a current source 428 and a switch 429.

In the embodiment depicted in Fig. 4, the sense resistor 442 with a resistance value $R_{sense}$ is not directly connected to a fixed voltage, such as, the ground (zero volt). Specifically, the sense resistor 442 is connected to the resistor 444-1 with a resistance value $R_{aux1}$ and the resistor 444-2 with a resistance value $R_{aux2}$ (e.g., to the ground through the resistor 444-1 with the resistance value $R_{aux1}$ and the resistor 444-2 with the resistance value $R_{aux2}$) to compensate for a

current disturbance in the converter circuit 406 (e.g., the influence of the auxiliary windings 438-1, 438-2 on the measurement of the resonant current). Consequently, the current disturbance can be compensated using low ohmic resistors with low costs.

In the embodiment depicted in Fig. 4, at low input voltages, the SUPIC pin of the SMPS control IC 426 is supplied via the auxiliary winding 438-2, which has a higher number of winding na2 than the number of winding na1 of the auxiliary winding 438-1, and therefore a higher voltage. Via a linear regulator (the transistor M3), the voltage at the SUPIC pin is limited to 15V. At low input voltage, the supply voltage via the auxiliary winding 438-1 is below 15V. When the input voltage rises, the supply via the auxiliary winding 438-1 rises above 15V and the SMPS control IC 426 is supplied via the auxiliary winding 438-1. As this is a lower voltage, it improves the efficiency and limits the voltage range at the SUPIC pin.

A sense resistor (Rsense) that connects to a SMPS control IC directly can cause higher power loss, due to the high current in the resonant tank. In some embodiments, a capacitive divider is used with a sense resistor to reduce power loss.

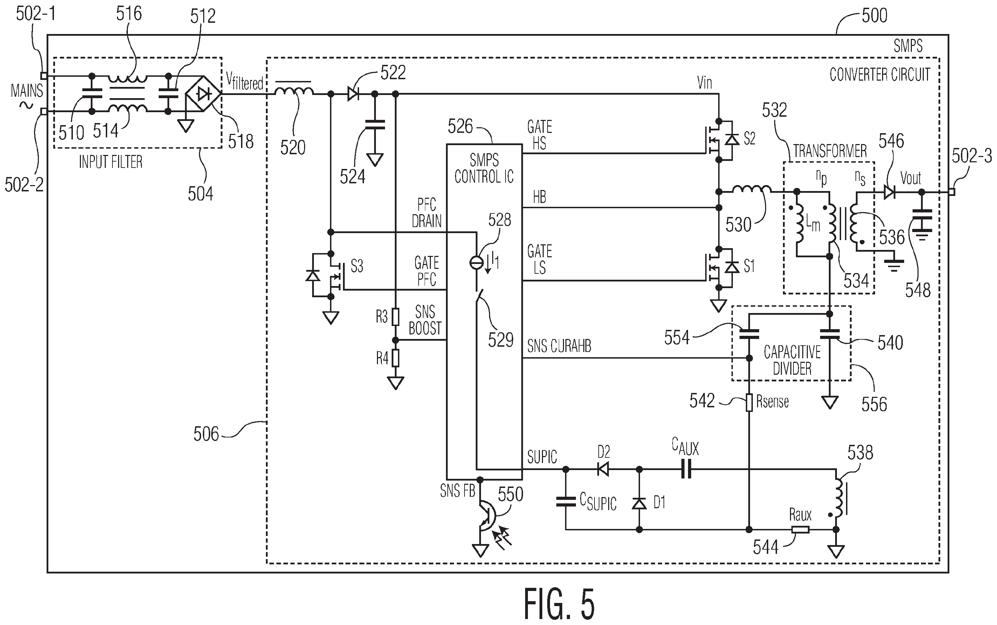

Fig. 5 depicts an SMPS 500 in accordance with an embodiment of the present invention. The SMPS 500 depicted in Fig. 5 is an embodiment of the SMPS 100 depicted in Fig. 1. However, the SMPS 100 depicted in Fig. 1 is not limited to the embodiment depicted in Fig. 5. In the embodiment depicted in Fig. 5, the SMPS 500 includes input/output terminals 502-1, 502-2, 502-3, an input filter 504, and a converter circuit 506. In the embodiment depicted in Fig. 5, the input terminals 502-1, 502-2 of the SMPS 500 are connected to AC mains, which supply AC power to the SMPS 500. The energy received through the input terminals 502-1, 502-2 is filtered by the input filter 504. An output voltage Vout of the SMPS is output through the output terminal 502-3. In some embodiments, the SMPS 500 is implemented on a substrate, such as a PCB. In an embodiment, at least one component of the SMPS 500 is packaged as a stand-alone semiconductor IC chip. Although the SMPS is shown in Fig. 5 as including certain circuit elements, in other embodiments, the SMPS may include one or more additional/different circuit elements. For example, the SMPS may include a capacitive circuit connected to the output terminal 502-3, which is used to stabilize the output voltage Vout of the SMPS 500.

In the embodiment depicted in Fig. 5, the input filter 504 includes capacitors 510, 512, inductors 514, 516, and a bridge rectifier diode 518. In the embodiment depicted in Fig. 5, the input filter 504 is configured to filter the AC power inputted into the SMPS 500. In some embodiments, the input filter 504 is implemented on a substrate, such as a semiconductor wafer or a PCB. In an embodiment, at least one component (e.g., the bridge rectifier diode 518) of the input filter 504 is packaged as an IC chip.

In the embodiment depicted in Fig. 5, the converter circuit 506 includes inductors 520, 530, capacitors 524, 540, 548, 554, $C_{SUPIC}$, $C_{AUX}$, diodes 522, 546, D1, D2, resistors R3, R4, 542, 544, a SMPS control IC 526, a transformer 532 that includes a primary winding 534 and a secondary winding 536 and has a magnetizing inductance $L_m$, an auxiliary winding 538, switches S1, S2, S3 that are implemented as, for example, metal-oxide-semiconductor field-effect transistors (MOSFETs), and an opto coupler 550. In the embodiment depicted in Fig. 5, the capacitor 540 and the capacitor 554 form a capacitive divider 556 and the SMPS control IC 526 is connected to the sense resistor 542 through the capacitive divider 556. In some embodiments, the switch S2 is referred to as the high-side switch S2 while the switch S1 is referred to as the low-side switch S1. In the embodiment depicted in Fig. 5, the SMPS control IC 526 is configured to control the output voltage via the opto coupler 550. In some embodiments, the SMPS control IC is configured to control the switches S1, S2, by, for example, controlling voltages to gate terminal of the switches S1, S2. In some embodiments, the SMPS control IC is configured to perform a PFC function. In some embodiments, the supply voltage to the SMPS control IC is a function of the input voltage to the converter circuit 506. In the embodiment depicted in Fig. 5, the capacitor 554 is connected between the sense resistor 542 and the transformer 532. Although the converter circuit 506 is shown in Fig. 5 as including certain circuit elements, in other embodiments, the converter circuit 506 may include one or more additional/different circuit elements. For example, although the converter circuit 506 is shown in Fig. 5 as including the MOSFET switches S1, S2, S3, in other embodiments, the converter circuit 506 may include other type of switches.

In the embodiment depicted in Fig. 5, the SMPS control IC 526 is embodied as a packaged IC device. As shown in Fig. 5, the SMPS control IC 526 includes 9 pins/terminals, PFCDRAIN (connected to the inductor 520, the switch S3, and the diode 522), GATEPFC (connected to the switch S3), SNSBOOST (connected to the resistors R3, R4), SNSFB (connected to the opto coupler 550), GATEHS (connected to the high-side switch S2), HB (connected to the inductor 530), GATELS (connected to the low-side switch S1), SNSCURAHB (connected to the capacitive divider 556 formed by the capacitor 540 and the capacitor 554), and SUPIC (connected to the diode D2 and the capacitor $C_{SUPIC}$). In the embodiment depicted in Fig. 5, the SNSCURAHB pin of the SMPS control IC 526 is connected to the sense resistor 542 through the capacitive divider 556. In the embodiment depicted in Fig. 5, the switch S2 is coupled to the GATEHS pin of the SMPS control IC 526; the switch S1 is coupled to the GATELS pin of the SMPS control IC 526; the sense resistor 542 is connected between the transformer 532 and the SNSCURAHB pin of the SMPS control IC 526; the resistor 544 is coupled to the auxiliary winding 538; and the capacitors $C_{SUPIC}$, $C_{AUX}$ and the diodes D2, D2 are connected between the SUPIC pin of the SMPS control IC 526 and the auxiliary winding 538. The packaged IC device depicted in Fig. 5 is one possible packaged IC device of the SMPS control IC 526. However, the packaged IC device of the SMPS control IC 526 is not limited to the embodiment shown in Fig. 5. For example, although the packaged IC device of the SMPS control IC 526 is shown in Fig. 5

as including 9 pins/terminals, in other embodiments, the SMPS control IC 526 may include more than or less than 9 pins/terminals. In the embodiment depicted in Fig. 5, the SMPS control IC 526 can be simplified as containing a current source 528 and a switch 529.

In the embodiment depicted in Fig. 5, the sense resistor 542 with a resistance value $R_{sense}$ is not directly connected to a fixed voltage, such as, the ground (zero volt). Specifically, the sense resistor 542 is connected to the resistor 544 (e.g., to the ground through the resistor 544) with a resistance value $R_{aux}$ to compensate for a current disturbance in the converter circuit 506 (e.g., the influence of the auxiliary winding 538 on the measurement of the resonant current). Consequently, the current disturbance can be compensated using low ohmic resistors with low costs. In some embodiments, the capacitive divider 556 formed by the capacitor 540 and the capacitor 554 is used with the auxiliary windings 438-1, 438-2.

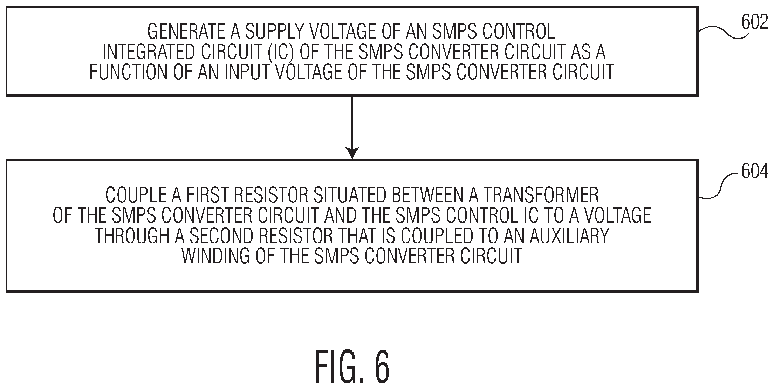

Fig. 6 is a process flow diagram of a method for operating a switched-mode power supply (SMPS) converter circuit in accordance with an embodiment of the invention. At block 602, a supply voltage of an SMPS control IC of the SMPS converter circuit is generated as a function of an input voltage of the SMPS converter circuit. At block 604, a first resistor situated between a transformer of the SMPS converter circuit and the SMPS control IC is connected to a voltage through a second resistor that is coupled to an auxiliary winding of the SMPS converter circuit, for example, to compensate for a current disturbance in the SMPS convert circuit. The SMPS converter circuit may be the same as or similar to an embodiment of the converter circuit 106 depicted in Fig. 1, the converter circuit 406 depicted in Fig. 4, and/or the converter circuit 506 depicted in Fig. 5.

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

**1.** A switched-mode power supply (SMPS) converter circuit, the SMPS converter circuit comprising:

a transformer comprising a primary winding and a secondary winding;
an SMPS controller;
a first resistor coupled between the transformer and the SMPS controller;
an auxiliary winding; and
a second resistor coupled to the auxiliary winding, wherein the first resistor is coupled to the second resistor.

**2.** The SMPS converter circuit of claim 1, wherein a supply voltage to the SMPS controller is a function of an input voltage to the SMPS converter circuit.

**3.** The SMPS converter circuit of claim 1 or 2, wherein the SMPS controller comprises an SMPS control integrated circuit (IC).

**4.** The SMPS converter circuit of claim 3, wherein the first resistor is coupled between the transformer and a first pin of the SMPS control IC.

**5.** The SMPS converter circuit of claim 3 or 4, further comprising a first switch coupled to the SMPS control IC and the transformer and a second switch coupled to the SMPS control IC and the transformer.

**6.** The SMPS converter circuit of claim 3 or 4, further comprising a first switch coupled to a first pin of the SMPS control IC and a second switch coupled to a second pin of the SMPS control IC.

**7.** The SMPS converter circuit of claim 6, wherein the SMPS control IC is configured to control the first switch and the second switch.

**8.** The SMPS converter circuit of any preceding claim, further comprising a capacitor or a third resistor coupled between the first resistor and the transformer.

**9.** The SMPS converter circuit of any preceding claim, further comprising a plurality of capacitors and a plurality of diodes coupled between the SMPS controller and the auxiliary winding.

**10.** The SMPS converter circuit of any preceding claim, wherein the SMPS controller is configured to perform a Power Factor Correction (PFC) function.

**11.** The SMPS converter circuit of any preceding claim, wherein the SMPS controller is configured to perform an Asymmetrical Half Bridge (AHB) function.

**12.** The SMPS converter circuit of any preceding claim, further comprising:

a second auxiliary winding; and
a third resistor coupled to the second auxiliary winding, wherein the first resistor is coupled to the second and third resistors.

**13.** A method for operating a switched-mode power supply (SMPS) converter circuit, the method comprising:

generating a supply voltage of an SMPS control integrated circuit (IC) of the SMPS converter circuit as a function of an input voltage of the SMPS converter circuit; and
coupling a first resistor situated between a transformer of the SMPS converter circuit and the SMPS control IC to a voltage through a second resistor that is coupled to an auxiliary winding of the SMPS converter circuit.

102-1
116
112
100
SMPS
MAINS
~
102-2
110
114
118
INPUT FILTER
104
$V_{filtered}$
122
Vin
CONVERTER CIRCUIT
120
124
126
SMPS
CONTROL IC
GATE
HS
S2
132
TRANSFORMER
MODEL
146
102-3
130
Vout
$n_p$
$n_s$
X
HB
PFC
DRAIN
128
$I_1$
$L_m$
136
$n_s$
GATE
LS
S1
S3
GATE
PFC
134
148
SNS
BOOST
R3
R4
SNS
CURAHB
140
$V_{CR}$
129
Rsense
142
138
SUPIC
$D_2$
$C_{AUX}$
$C_{SUPIC}$
$D_1$
144
$n_a$
Raux
106
SNS FB
150
FIG. 1

Vin
1
3
126
GATE HS
S2
SMPS CONTROL IC
TRANSFORMER MODEL
132
146
102-3
$n_p$
$n_s$
x
Vout
HB
+
$n_p$
$L_m$
136
$n_s$
148
−
GATE LS
S1
134
$V_{CR}$
SNS CURAHB
140
Rsense
$C_{AUX}$
$D_2$
142
138
SUPIC
+
−
2
$n_a$
$C_{SUPIC}$
$D_1$
+
Raux
144

FIG. 2

Vin
126
SMPS
CONTROL IC
GATE
HS
S2
HB
GATE
LS
S1
SNS
CURAHB
SUPIC
C_SUPIC
D_2
C_AUX
D_1
Rsense
142
2
3
1
TRANSFORMER
MODEL
132
n_p
L_m
136
n_s
134
146
x
Vout
4
102-3
V_CR
140
138
n_a
Raux
144
FIG. 3

402-1
416
412
400
SMPS
MAINS
~
410
414
402-2
INPUT FILTER
404
418
V filtered
420
422
424
CONVERTER CIRCUIT
Vin
426
SMPS CONTROL IC
GATE HS
S2
432
TRANSFORMER MODEL
446
402-3
np
ns
Vout
HB
430
Lm
436
PFC DRAIN
428
I1
S3
GATE PFC
GATE LS
S1
434
448
SNS CURAHB
440
R3
SNS BOOST
429
Rsense
442
R4
D22
CAUX2
438-2
15V (+V)
M3
D21
na2
CSUPIC2
406
CAUX1
D12
438-1
SUPIC
SNS FB
450
CSUPIC1
D11
na1
Raux2
Raux1
444-2
444-1

FIG. 4

502-1
516
512
500
SMPS
MAINS ~
CONVERTER CIRCUIT
510
514
518
$V_{filtered}$
522
Vin
502-2
INPUT FILTER
504
520
524
526
SMPS CONTROL IC
GATE HS
S2
532
TRANSFORMER
546
502-3
$n_p$
$n_s$
Vout
HB
PFC DRAIN
528
530
$L_m$
536
$I_1$
S3
GATE PFC
GATE LS
S1
534
548
R3
SNS BOOST
529
554
540
R4
SNS CURAHB
CAPACITIVE DIVIDER
542
Rsense
556
506
SUPIC
D2
$C_{AUX}$
538
SNS FB
550
$C_{SUPIC}$
D1
Raux
544


FIG. 5

602
GENERATE A SUPPLY VOLTAGE OF AN SMPS CONTROL INTEGRATED CIRCUIT (IC) OF THE SMPS CONVERTER CIRCUIT AS A FUNCTION OF AN INPUT VOLTAGE OF THE SMPS CONVERTER CIRCUIT
604
COUPLE A FIRST RESISTOR SITUATED BETWEEN A TRANSFORMER OF THE SMPS CONVERTER CIRCUIT AND THE SMPS CONTROL IC TO A VOLTAGE THROUGH A SECOND RESISTOR THAT IS COUPLED TO AN AUXILIARY WINDING OF THE SMPS CONVERTER CIRCUIT

FIG. 6

# EUROPEAN SEARCH REPORT

Application Number
EP 26 16 6134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/022176 A1 (KOBAYASHI YOSHINORI [JP]) 18 January 2024 (2024-01-18)<br>* figure 1 *<br>* figure 3 *<br>* figure 11 *<br>* paragraph [0025] - paragraph [0028] *<br>* paragraph [0035] - paragraph [0060] *<br>* paragraph [0123] - paragraph [0131] *<br>----- | 1-13 | INV.<br>H02M1/00<br>H02M1/42<br>H02M3/00<br>H02M3/335 |
| X<br><br>A | US 2018/367029 A1 (FUJI ELECTRIC CO LTD [JP]) 20 December 2018 (2018-12-20)<br>* figure 1 *<br>* paragraph [0026] - paragraph [0049] *<br>----- | 1,13<br><br>2-12 | |
| X<br><br>A | US 2020/106363 A1 (YOSHIZAWA TSUYOSHI [JP] ET AL) 2 April 2020 (2020-04-02)<br>* figure 1 *<br>* paragraph [0026] - paragraph [0032] *<br>----- | 1,13<br><br>2-12 | |
| A | US 2024/072674 A1 (SALIVA ALLAN [US] ET AL) 29 February 2024 (2024-02-29)<br>* figure 3 *<br>----- | 1-13 | TECHNICAL FIELDS SEARCHED (IPC)<br>H02M |

The present search report has been drawn up for all claims

| Place of search | Date of completion of the search | Examiner |
|---|---|---|
| The Hague | 20 July 2026 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

# ANNEX TO THE EUROPEAN SEARCH REPORT ON EUROPEAN PATENT APPLICATION NO. EP 26 16 6134

This annex lists the patent family members relating to the patent documents cited in the above-mentioned European search report. The members are as contained in the European Patent Office EDP file on
The European Patent Office is in no way liable for these particulars which are merely given for the purpose of information.

20-07-2026

| Patent document cited in search report | Publication date | Patent family member(s) | Publication date |
|---|---|---|---|
| US 2024022176 A1 | 18-01-2024 | CN 117411292 A | 16-01-2024 |
| | | JP 7845094 B2 | 14-04-2026 |
| | | JP 2024011611 A | 25-01-2024 |
| | | US 2024022176 A1 | 18-01-2024 |
| US 2018367029 A1 | 20-12-2018 | CN 109088544 A | 25-12-2018 |
| | | JP 6904079 B2 | 14-07-2021 |
| | | JP 2019004577 A | 10-01-2019 |
| | | US 10158282 B1 | 18-12-2018 |
| US 2020106363 A1 | 02-04-2020 | CN 110994997 A | 10-04-2020 |
| | | US 2020106363 A1 | 02-04-2020 |
| US 2024072674 A1 | 29-02-2024 | CN 117639524 A | 01-03-2024 |
| | | US 2024072674 A1 | 29-02-2024 |

EPO FORM P0459

For more details about this annex : see Official Journal of the European Patent Office, No. 12/82